# EUROPÄISCHE PATENTANMELDUNG

(11) **EP 2 159 576 A1**
(43) Veröffentlichungstag der Anmeldung: **03.03.2010**
(21) Anmeldenummer: 08015001.4
(22) Anmeldetag: 25.08.2008
(51) Int. Cl.: G01N 29/28, G10K 11/02, G01N 29/265, G01N 29/24

(54) **Ultraschallprüfkopf**

(71) Anmelder: Siemens Aktiengesellschaft, 80333 München (DE)
(72) Erfinder: Clossen-Von Lanken Schulz, Michael, 47608 Geldern (DE); Obermayr, Stefan, 45475 Mülheim (DE); Opheys, Michael, Dr., 41334 Nettetal (DE); Rauschenbach, Hans, 46485 Wesel (DE)

(57) **Zusammenfassung**

Die Erfindung betrifft ein Ultraschallprüfkopf (1) zum Prüfen von einem Prüfgegenstand mittels der Ultraschallprüftechnik, wobei zwischen einer Ultraschallprüfkopffläche und einer zu prüfenden Oberfläche (6) ein Koppelmittel angeordnet ist und der Ultraschallprüfkopf (1) eine Prüfkopfhalterung (5) aufweist, die derart ausgebildet ist, dass ein Ausströmen des Koppelmittels verhindert ist.

## Beschreibung

Die Erfindung betrifft einen Ultraschallprüfkopf umfassend eine Ultraschallprüfkopffläche, die durch einen Rand begrenzt ist.

Die Ultraschallprüftechnik wird in vielen Gebieten des Maschinenbaus eingesetzt, um beispielsweise Ungänzen in Rotoren von Dampfturbinen, Gasturbinen oder Generatoren aufzufinden. Die Ultraschalltechnik hat sich hierbei als zuverlässige Prüftechnik bewährt. Bei der Ultraschallprüftechnik kommen konventionelle Prüfköpfe als auch die sogenannten Phased Array Prüfköpfe zum Einsatz. Für ein gutes Prüfergebnis ist es wichtig, dass der Ultraschallprüfkopf mit der Oberfläche des Prüfgegenstandes ultraschalltechnisch verbunden ist. Dadurch wird ein Eindringen der Ultraschallwelle in den Prüfgegenstand gewährleistet. Ein Ultraschallprüfkopf umfasst eine Ultraschallprüfkopffläche, von der aus die Ultraschallwellen ausgestrahlt werden. Damit die Ultraschallwellen gut in den Prüfgegenstand eindringen können, wird üblicherweise ein Koppelmittel zwischen der Ultraschallprüfkopffläche und dem Prüfgegenstand angeordnet. Dieses Koppelmittel kann beispielsweise Wasser oder ein Gel sein.

Viele Prüfgegenstände weisen eine Oberfläche auf, die nicht eben ist und Konturen aufweist. Eine optimale Ankopplung des Ultraschallprüfkopfes auf diese Oberfläche ist daher erschwert. Beispielsweise sind sogenannte Dichtbänder bei Turbinen derart angeordnet, dass sogenannte Dichtlippen aus einer Oberfläche herausragen. Ein Ultraschallprüfkopf sollte möglichst nahe an diese Oberfläche angekoppelt werden. Die Dichtlippen verhindern allerdings eine direkte Ankopplung an die zu prüfende Oberfläche. Die Dichtbänder werden in Nuten eingestemmt. Wenn ein mit Dichtbändern versehener Rotor ultraschalltechnisch geprüft werden soll, werden derzeit die Dichtbänder aus den Nuten gezogen. Allerdings besteht selbst bei gezogenen Dichtbändern das Problem, dass sich nicht genügend Koppelmittel zwischen dem Rotor und dem Ultraschallprüfkopf befindet. Es kann sein, dass das Koppelmittel in den freien Nuten verschwindet und eine gute Ankopplung des Prüfkopfes an die Prüffläche nicht möglich ist.

Es ist üblich, die Ankopplung des Ultraschallprüfkopfes durch benetzen bzw. beträufeln oder einkleistern des Rotors mit Öl zu gewährleisten. Allerdings ist der dafür benötigte Zeitaufwand erheblich. Der Rotor wird bei dieser Methode mit einem Öl benetzt, was mit einem Pinsel erfolgt. Der Rotor dreht sich hierbei mit wenigen Umdrehungen pro Minute. Allerdings sind die Nuten bei solch einer Methode stellenweise sehr unzureichend mit dem Koppelmittel gefüllt. Die Prüfergebnisse sind daher nicht optimal.

Wünschenswert wäre es eine Prüfmöglichkeit mit Ultraschallprüfköpfen zu haben, bei der die Ankopplung an die zu prüfende Fläche verbessert ist.

An dieser Stelle setzt die Erfindung an, deren Aufgabe es ist, die Ankopplung eines Ultraschallprüfkopfes auf eine zu prüfende Fläche zu verbessern.

Die Aufgabe wird gelöst durch einen Ultraschallprüfkopf umfassend eine Ultraschallprüfkopffläche, die durch einen Rand begrenzt ist, wobei eine Prüfkopfhalterung um den Ultraschallprüfkopf entlang des Randes angeordnet ist, wobei die Prüfkopfhalterung über die Ultraschallprüfkopffläche ragt.

Die Erfindung geht u.a. von dem Gedanken aus, dass der Ultraschallprüfkopf durch einen Rand begrenzt wird und dass ein Koppelmittel zwischen der Ultraschallprüfkopffläche und der zu prüfenden Oberfläche die Möglichkeit hat seitlich am Ultraschallprüfkopf zu entweichen. Die Erfindung schlägt daher vor, um den Rand des Ultraschallprüfkopfes eine Prüfkopfhalterung anzuordnen, die ein Entweichen des Koppelmittels verhindert. Die Prüfkopfhalterung sollte daher derart über den Rand hinausragen, dass ein Kontakt zwischen der Oberfläche und der Prüfkopfhalterung entsteht. Eine Bewegung des Ultraschallprüfkopfes entlang der zu prüfenden Oberfläche ist nunmehr problemlos möglich, da das Koppelmittel zwischen der Ultraschallprüfkopffläche und der zu prüfenden Oberfläche durch die Prüfkopfhalterung mit gezogen wird.

Die Prüfkopfhalterung wirkt sozusagen als Scheibenwischer.

Die Prüfkopfhalterung ist derart ausgebildet, dass diese einen flexiblen Rahmen bildet, der als Rückhaltevorrichtung für das Koppelmittel dient. Eine Beschädigung des Prüfkopfes oder von Vorsatzteilen durch Grate wird dadurch wirksam vermieden, da eine gleichmäßigere Ankopplung gewährleistet ist und die Ultraschallsignale bei der Ultraschallprüfung verbessert sind. Neben der erheblichen Zeitersparnis während einer Ultraschallprüfung ist eine verbesserte Prüfempfindlichkeit möglich.

Vorteilhafte Weiterbildungen sind in den Unteransprüchen angegeben.

Vorteilhafterweise weist die Prüfkopfhalterung einen Kontaktrand auf, der derart über den Rand ragt, dass der Kontaktrand in einer Ebene liegt. Das das Koppelmittel meistens eine viskose Flüssigkeit ist, ist es natürlich von Vorteil, wenn ein Ausströmen des Koppelmittels in allen Richtungen verhindert wird. Daher ist es von Vorteil, wenn die Prüfkopfhalterung eine Lücke offen lässt, um ein Ausströmen des Koppelmittels zu Verhindern. Der Kontaktrand sollte daher in einer Ebene liegen.

In einer weiteren vorteilhaften Weiterbildung besteht der über den Rand hinausragende Teil der Prüfkopfhalterung aus einem flexiblen Material. Ähnlich wie bei einem Scheibenwischer kann die Prüfkopfhalterung derart ausgebildet werden, dass das Koppelmittel durch den über den Rand hinausragenden Teil der Prüfkopfhalterung mitgezogen wird. Ein möglicher Spalt zwischen der Prüfkopfhalterung und der zu prüfenden Oberfläche wird dadurch minimiert, wodurch ein Ausströmen des Koppelmittels weiterhin wirksam vermieden wird.

In einer vorteilhaften Weiterbildung ist das flexible Material ein Gummi. Das Material Gummi hat sich als geeignetes Material erwiesen, da die Rückstellkräfte in Bezug auf die viskosen Eigenschaften des Koppelmittels ideal sind.

Vorteilhafterweise wird der über den Rand hinausragende Teil der Prüfkopfhalterung als eine Gummilippe ausgebildet. Ähnlich wie bei einem Scheibenwischer sollte die Prüfkopfhalterung derart ausgebildet sein, dass die Rückstellkräfte bei einer Bewegung des Ultraschallprüfkopfes optimiert sind, d.h. dass ein Ausströmen des Koppelmittels verhindert wird.

In einer vorteilhaften Weiterbildung umfasst der über den Rand hinausragende Teil der Prüfköpfe Bürsten. Mit Bürsten wird ein ähnlicher Effekt erreicht wie mit Gummilippen. Auch Bürsten haben die Eigenschaft ein Koppelmittel zurückzuhalten, wobei Bürsten gegen eine zu prüfende Oberfläche gedrückt werden können.

In einer weiteren vorteilhaften Weiterbildung weist die Prüfkopfhalterung ein Zuführ-Mittel zum Zuführen von Koppelmittel auf. Es ist nahezu nicht möglich, einen komplett dichten Raum zwischen der zu prüfenden Oberfläche und der Ultraschallprüfkopffläche auszubilden. Ein geringer Teil des Koppelmittels wird naturgemäß in einem Spalt zwischen der Prüfkopfhalterung und der zu prüfenden Oberfläche ausströmen. Durch ein permanentes Zuführen von Koppelmittel in den Raum zwischen der Ultraschallprüfkopffläche und der zu prüfenden Oberfläche wird sichergestellt, dass in diesem Raum genügend Koppelmittel vorhanden ist. Vorteilhafterweise ist das Zuführ-Mittel als ein Rohr zum Führen von Koppelmittel ausgebildet.

Ein Ausführungsbeispiel der Erfindung wird anhand der folgenden Figuren näher erläutert. Komponenten mit ähnlicher Funktionsweise weisen dieselben Bezugszeichen auf.

Es zeigen:
- FIG 1: eine perspektivische Darstellung eines Ultraschallprüfkopfes;
- FIG 2: eine Seitenansicht des Ultraschallprüfkopfes;
- FIG 3: eine Seitenansicht von Dichtbändern;
- FIG 4: eine Seitenansicht eines Ausschnitts eines Rotors mit Turbinenschaufeln und Dichtbändern.

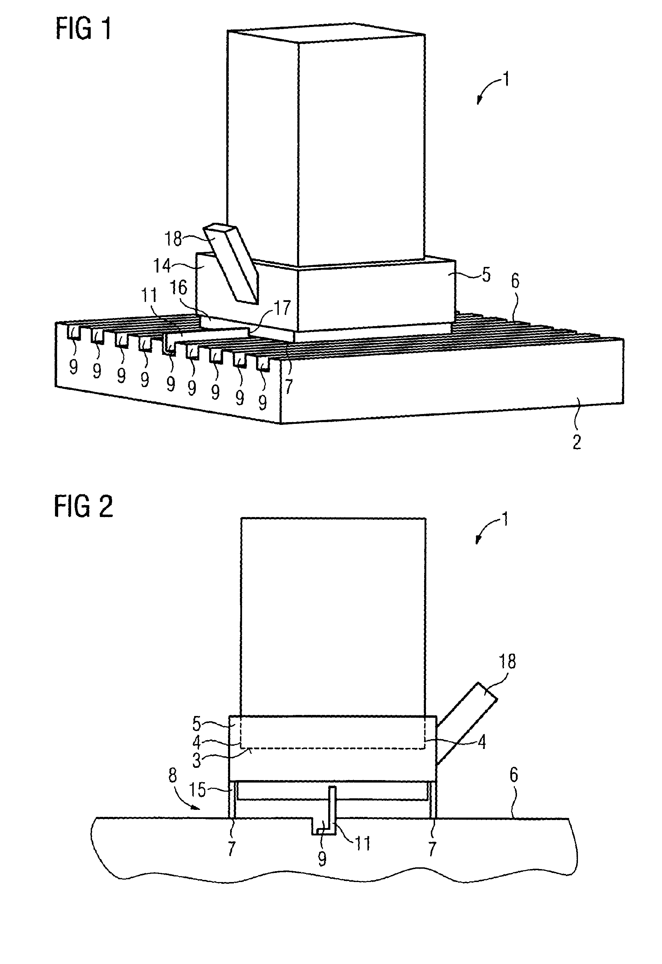

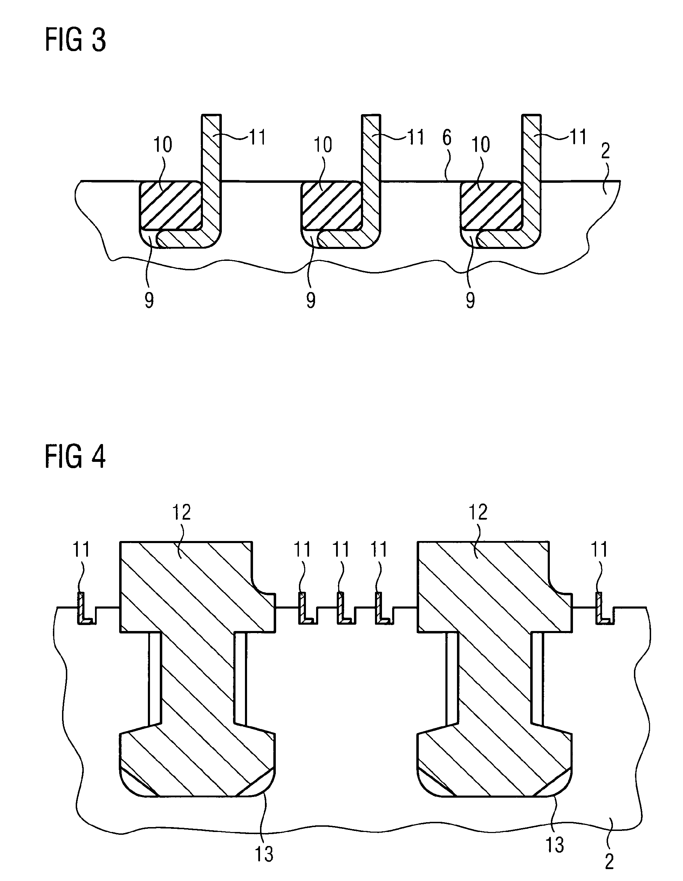

Die FIG 1 zeigt einen Ultraschallprüfkopf 1, der zur Durchführung einer Ultraschallprüfung an einen Ausschnitt eines Rotors 2 angekoppelt ist. Der Ultraschallprüfkopf 1 weist eine in der FIG 1 nicht näher dargestellte Ultraschallprüfkopffläche 3 auf, die durch einen Rand 4 begrenzt ist. Um diesen Rand 4 ist eine Prüfkopfhalterung 5 angeordnet. Die Prüfkopfhalterung 5 ist um den gesamten Ultraschallprüfkopf 1 angeordnet und ragt über die Ultraschallprüfkopffläche 3 hinaus. Die Prüfkopfhalterung 5 ist hierbei um den Ultraschallprüfkopf 1 entlang des Randes 4 angeordnet. Der Ultraschallprüfkopf 1 wird auf eine zu prüfende Oberfläche 6 angeordnet. Ein möglicher Spalt zwischen der Prüfkopfhalterung 5 und der zu prüfenden Oberfläche 6 sollte minimiert werden. Die Prüfkopfhalterung 5 weist einen Kontaktrand 7 auf, wobei der Kontaktrand 7 in einer Ebene 8 liegt. In der FIG 2 ist eine Seitenansicht des Ultraschallprüfkopfes 1 zu sehen. Der Ultraschallprüfkopf 1 wird auf die zu prüfende Oberfläche 6 derart angeordnet, dass möglichst kein Spalt zwischen dem Kontaktrand 7 und der zu prüfenden Oberfläche 6 entsteht. Die zu prüfende Oberfläche 6 kann die Oberfläche eines Turbinenrotors oder die Oberfläche eines Generatorrotors sein. In der FIG 3 ist ein Ausschnitt eines Rotors 2 zu sehen. Der Rotor 2 weist hierbei in Nuten 9 mit Stemmmaterial 10 eingestemmte Dichtbänder 11 auf. Der Übersichtlichkeit wegen ist in der FIG 3 der Ultraschallprüfkopf 1 nicht näher dargestellt. In der Praxis würde der Ultraschallprüfkopf 1 auf die zu prüfende Oberfläche 6 angeordnet werden. Zwischen der Ultraschallprüfkopffläche 3 und der zu prüfenden Oberfläche 6 wird ein Koppelmittel angeordnet. Eine ultraschalltechnische Kopplung zwischen der Ultraschallprüfkopffläche 3 und der zu prüfenden Oberfläche 6 wird dadurch gewährleistet.

In der FIG 4 ist ein weiterer Ausschnitt eines Rotors 2 dargestellt. Der Rotor 2 umfasst neben den Dichtbändern 11 in Schaufelnuten 13 angeordnete Turbinenschaufeln 12 auf.

Eine Prüfung des Rotors 2 ist zwischen den Turbinenschaufeln 12 möglich.

Die Prüfkopfhalterung 5 weist ein erstes Material 14 auf, das um den Ultraschallprüfkopf 1 angeordnet ist. Der über den Rand 4 hinausragende Teil 15 der Prüfkopfhalterung 5 besteht aus einem flexiblen Material. Dieses flexible Material kann ein Gummi sein. In einer alternativen Ausführungsform umfasst die Prüfkopfhalterung 5 Bürsten, die nicht näher dargestellt sind, die über den Rand hinausragen.

Der über den Rand hinausragende Teil der Prüfkopfhalterung 5 wird als eine Gummilippe 16 ausgebildet. Die Gummilippe 16 kann einen Schlitz 17 aufweisen, der derart ausgebildet ist, dass ein Dichtband 11 eingepasst ist. Durch diesen Schlitz 17 und dem Dichtband 11 sollte kein Koppelmittel ausströmen. Um eine ausreichende Menge an Koppelmittel zwischen der Ultraschallprüfkopffläche 3 und der zu prüfenden Oberfläche 6 zu haben, ist ein Zuführ-Mittel 18 zum Zuführen von Koppelmittel vorgesehen. Die Menge an zugeführtem Koppelmittel sollte derart sein, dass immer derart genügend Koppelmittel zwischen der Ultraschallprüfkopffläche 3 und der zu prüfenden Oberfläche 6 ist. Idealerweise ist das Zuführ-Mittel 18 als Rohr ausgebildet.

## Patentansprüche

1. Ultraschallprüfkopf (1),
umfassend eine Ultraschallprüfkopffläche (3), die durch einen Rand (4) begrenzt ist,
**dadurch gekennzeichnet, dass**
eine Prüfkopfhalterung (5) um den Ultraschallprüfkopf (1) entlang des Randes (4) angeordnet ist,
wobei die Prüfkopfhalterung (5) über die Ultraschallprüfkopffläche (3) ragt.

2. Ultraschallprüfkopf (1) nach Anspruch 1,
wobei die Prüfkopfhalterung (5) einen Kontaktrand (7) aufweist, der derart über den Rand (4) ragt, dass der Kontaktrand (7) in einer Ebene (8) liegt.

3. Ultraschallprüfkopf (1) nach Anspruch 1 oder 2,
wobei der über den Rand (4) hinausragende Teil der Prüfkopfhalterung (5) aus einem flexiblen Material besteht.

4. Ultraschallprüfkopf (1) nach Anspruch 3,
wobei das flexible Material ein Gummi ist.

5. Ultraschallprüfkopf (1) nach Anspruch 4,
wobei der über den Rand (4) hinausragende Teil der Prüfkopfhalterung (5) als eine Gummilippe (16) ausgebildet ist.

6. Ultraschallprüfkopf (1) nach Anspruch 1 oder 2,
wobei der über den Rand (4) hinausragende Teil der Prüfkopfhalterung (5) Bürsten fasst.

7. Ultraschallprüfkopf (1) nach Anspruch 6,
wobei die Bürsten zum Zurückhalten von Koppelmittel ausgebildet sind.

8. Ultraschallprüfkopf (1) nach einem der vorhergehenden Ansprüche,
wobei die Prüfkopfhalterung 5 ein Zuführ-Mittel 18 zum Zuführen von Koppelmittel aufweist.

9. Ultraschallprüfkopf (1) nach Anspruch 8,
wobei das Zuführ-Mittel (18) als ein Rohr zum Führen von Koppelmittel ausgebildet ist.
